# FASCICULE DE BREVET EUROPEEN

(11) **EP 1 388 832 B1**
(45) Date de publication et mention de la délivrance du brevet: **08.04.2015**
(21) Numéro de dépôt: 03291970.6
(22) Date de dépôt: 06.08.2003
(51) Int. Cl.: G09B 19/00, G09B 19/06

(54) **Procédé de calibrage d'audio-intonation**
Verfahren zur Kalibrierung von Audio-Intonation
Method for calibrating audio intonation

(30) Priorité: 07.08.2002 FR 0210051
(43) Date de publication de la demande: 11.02.2004
(73) Titulaire: SPEEDLINGUA SA, 6304 Zug (CH)
(72) Inventeur: Lemoine, Hubert, 57000 Metz (FR); Munger, Jacky, 57155 Marly (FR)
(74) Mandataire: Santarelli

(56) Documents cités:
- EP-A- 1 139 318
- WO-A-92/14229
- FR-A- 2 674 660

## Description

La présente invention concerne un procédé de calibrage d'audio-intonation.

Elle concerne également un procédé d'acquisition d'une pratique orale d'une langue à étudier et un procédé d'exécution d'une chanson par un sujet.

D'une manière générale, la présente invention concerne un procédé dans lequel on modifie l'émission d'un signal audio d'une personne en modifiant l'information sonore qu'il reçoit lorsqu'il parle.

Un tel procédé est fondé sur un principe connu selon lequel la fourniture vocale d'un sujet, c'est-à-dire les sons qu'il émet, subit une transformation importante en fonction de la fourniture auditive appliquée à ce même sujet, c'est-à-dire de l'information sonore qu'il reçoit.

Il est connu, et notamment dans le domaine particulier de l'enseignement et de la pratique orale des langues, d'utiliser des appareils dans lesquels un signal audio émis par un sujet est restitué après traitement en temps réel aux organes auditifs du sujet.

Un tel procédé est notamment décrit dans le document WO92/14229.

Ce document décrit un dispositif dans lequel un signal audio émis par un sujet est modifié par des traitements pour tenir compte des caractéristiques d'une langue étrangères à étudier et du contenu harmonique de cette langue. Ce signal audio modifié est ensuite fourni par un signal vibratoire, et généralement par un signal sonore, au sujet en temps réel afin de modifier le signal audio émis par le sujet.

Cependant dans ce document, le signal audio émis par le sujet est traité de manière prédéterminée en fonction de la bande passante de la langue à apprendre, et notamment de la courbe enveloppe de cette bande.

En pratique, le circuit de traitement du signal comprend un égaliseur multi-fréquences qui est réglé de manière prédéterminée en fonction de la langue étrangère en question, et plus particulièrement de la bande passante de cette langue et de l'allure de cette bande passante, c'est-à-dire de la courbe enveloppe de cette bande. Dans la pratique, l'égaliseur est constitué de plusieurs filtres successifs ajustés sur des fréquences différentes.

Ainsi cet égaliseur est paramétré en fréquences par des caractéristiques de la langue à étudier de manière préétablie.

De même, ce document décrit un second traitement appliqué au signal audio émis par le sujet dans lequel les paramètres de réglages sont établis en fonction du contenu harmonique de vibration sonore de l'émission vocale recueillie et de paramètres dépendants de la langue à étudier.

Dans ce cas, un égaliseur multi-fréquences est paramétré par la différence entre le signal traité provenant de la fourniture vocale effective du sujet et des caractéristiques préétablies de cette langue.

Ainsi, ce document décrit la création à partir d'un premier signal représentatif de l'émission sonore du sujet, d'un deuxième signal modifié par rapport au premier signal de manière prédéterminée en fonction de la bande passante de la langue à apprendre, et notamment de la courbe enveloppe de cette langue, et d'un troisième signal qui est dérivé du premier signal par modification en fonction du contenu harmonique effectif de l'émission vocale et des caractéristiques de la langue.

Ces signaux sont ensuite restitués au sujet de manière sélective.

Un tel système de l'art antérieur représente l'inconvénient d'utiliser un paramétrage préétabli, ne prenant pas en compte le type de signal audio émis par le sujet.

La présente invention a pour but d'améliorer les procédés de calibrage d'audio-intonation existants, afin d'en simplifier l'utilisation et d'en élargir les applications.

A cet effet, la présente invention vise un procédé de calibrage d'audio-intonation dans lequel un signal audio émis par un sujet est restitué après traitement en temps réel aux organes auditifs du sujet.

Selon l'invention, ce procédé est caractérisé en ce qu'il comprend les étapes suivantes :
- acquisition d'un modèle de signal audio à imiter;
- analyse spectrale dudit modèle de signal audio ;
- acquisition d'un signal audio imité par le sujet ;
- analyse spectrale du signal audio imité ;
- comparaison des spectres du modèle de signal audio et du signal audio imité ;
- correction du signal audio imité en fonction du résultat de ladite comparaison ; et
- restitution du signal audio corrigé aux organes auditifs du sujet.

La présente invention permet, grâce à une analyse du contenu fréquentiel d'un signal audio à imiter et d'un signal audio imité par un sujet de transformer l'intonation d'une personne par modification en temps réel du contenu harmonique de son émission vocale et restitution de ce signal corrigé à partir de l'analyse fréquentielle.

Le procédé de calibrage permet ainsi d'augmenter ou de diminuer en temps réel l'intensité des différentes fréquences contenues dans le signal audio imité par comparaison avec un modèle de signal audio préenregistré.

Un tel procédé de calibrage permet au sujet de reproduire très exactement n'importe quel type de voix, en travaillant à partir d'un signal audio à imiter. Il trouve par conséquent son application non seulement dans l'acquisition d'une pratique orale d'une langue étrangère, dans laquelle il est possible d'imiter des séries de mots ou de phrases prononcées par une personne de langue maternelle choisie, mais aussi dans l'exécution d'une chanson, type karaoké, dans laquelle il devient possible de reproduire les intonations prises par un chanteur lors de l'exécution d'une chanson.

Selon les caractéristiques préférées de l'invention, ce procédé de calibrage d'audio-intonation comprend en outre les étapes suivantes :
- mesure de la dynamique du signal audio imité par le sujet ;
- mesure de la dynamique du signal audio corrigé ;
- comparaison de la dynamique du signal audio imité et du signal audio corrigé ; et
- correction de la dynamique du signal audio corrigé en fonction du résultat de ladite comparaison avant restitution du signal audio corrigé aux organes auditifs du sujet.

Il est ainsi possible de modifier l'enveloppe globale du signal corrigé en fonction du signal audio imité afin d'éviter que le signal corrigé restitué au sujet ne présente une dynamique trop différente du signal audio émis par le sujet.

Selon les caractéristiques préférées de l'invention, ce procédé de calibrage comprend en outre une étape de mémorisation de l'analyse spectrale du modèle de signal audio à imiter.

Ainsi, lorsque le signal audio à imiter est répété par un sujet de manière décalée, il est possible d'utiliser l'analyse spectrale du modèle de signal audio pour mettre en oeuvre le procédé de calibrage d'audio-intonation.

De manière particulièrement pratique, notamment lors de l'acquisition de la pratique orale d'une langue, le procédé de calibrage d'audio-intonation comprend une étape d'émission aux organes auditifs du sujet, du modèle de signal audio à imiter, préalablement à l'étape d'acquisition du signal audio imité par le sujet.

L'audition sonore par le sujet du signal à imiter préalablement à son imitation, facilite encore l'acquisition de la pratique orale d'une langue et l'amélioration de l'intonation lors de l'émission sonore d'un mot ou d'une phrase dans une langue étrangère.

Selon un premier mode d'application de ce procédé de calibrage d'audio-intonation, la présente invention concerne un procédé d'acquisition d'une pratique orale d'une langue à étudier, dans lequel un signal audio émis par un sujet est restitué après traitement en temps réel aux organes auditifs du sujet. Ce procédé d'acquisition met en oeuvre le procédé de calibrage d'audio-intonation conforme à l'invention.

Alternativement, la présente invention concerne également dans une seconde application un procédé d'exécution d'une chanson par un sujet, dans lequel un signal audio émis par un sujet est restitué après traitement en temps réel aux organes auditifs du sujet. Ce procédé d'exécution d'une chanson met également en oeuvre le procédé de calibrage d'audio-intonation conforme à l'invention.

Enfin, la présente invention vise également un moyen de stockage d'informations, fixe ou amovible, comprenant des portions de code logiciel adaptées à mettre en oeuvre les étapes du procédé de calibrage d'audio-intonation, du procédé d'acquisition d'une pratique orale d'une langue à étudier ou du procédé d'exécution d'une chanson conformes à l'invention.

D'autres particularités et avantages de l'invention apparaîtront encore dans la description ci-après.

Aux dessins annexés, donnés à titre d'exemples non limitatifs :
- la figure 1 est un algorithme illustrant un procédé de calibrage d'audio-intonation conforme à un premier mode de réalisation de l'invention ;
- les figures 2a, 2b, 2c sont des schémas illustrant des étapes du procédé de calibrage d'audio-intonation telles qu'illustrées aux figures 1 ou 5 ;
- la figure 3 est un algorithme illustrant un procédé d'acquisition d'une pratique orale d'une langue conforme un mode de réalisation de l'invention ;
- la figure 4 est un algorithme illustrant une étape d'étalonnage mise en oeuvre aux figures 3 et 6 ;
- la figure 5 est un algorithme illustrant un procédé de calibrage d'audio-intonation conforme à un deuxième mode de réalisation de l'invention ;
- la figure 6 est un algorithme illustrant un procédé d'exécution d'une chanson conforme à un mode de réalisation de l'invention ; et
- la figure 7 est un schéma bloc illustrant un ordinateur adapté à mettre en oeuvre l'invention.

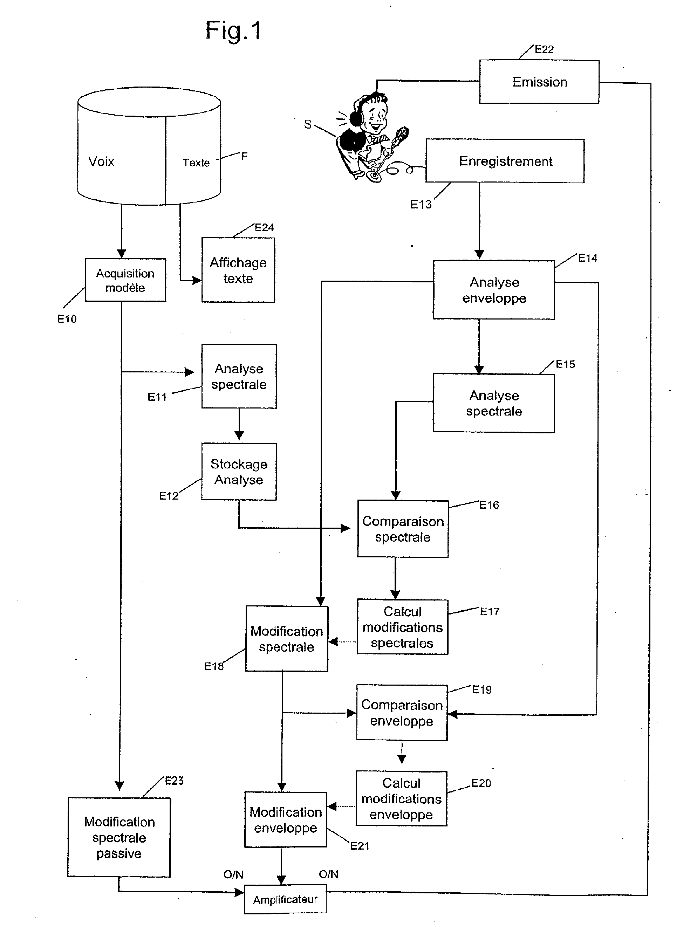

On va décrire tout d'abord en référence à la figure 1 un procédé de calibrage d'audio-intonation conforme à un premier mode de réalisation de l'invention.

Ce procédé de calibrage d'audio-intonation est destiné dans cet exemple à être utilisé dans un procédé d'acquisition de la pratique orale d'une langue.

Il est basé sur le fait que chaque langue utilise une ou plusieurs bandes spectrales avec des intensités qui sont propres. Aussi, tout sujet habitue son oreille à percevoir les champs spectraux qui sont propres à sa langue maternelle. Or, la voix ne reproduit que ce que l'oreille entend, de telle sorte qu'il est difficile pour une personne de prononcer correctement des mots dans une langue étrangère dès lors que son oreille n'est pas habituée à entendre les champs spécifiques à la nouvelle langue à étudier.

Le procédé de calibrage d'audio-intonation conforme à l'invention permet ainsi de rééduquer l'oreille d'un sujet en lui faisant entendre de manière prononcée les champs spécifiques de la langue à étudier.

Ce procédé comporte tout d'abord une étape d'acquisition E10 d'un modèle de signal audio à imiter.

Dans le cas d'une langue étrangère, ce signal audio peut être un mot ou un ensemble de mots prononcé par une personne native de la langue à étudier.

Cette acquisition d'un modèle se fait de préférence à partir d'un fichier informatique sur lequel peuvent être stockés différents modèles de signaux audio.

Ces fichiers-son F peuvent être stockés sur un disque dur d'un ordinateur ou tout autre support informatique tel qu'un CD ROM, carte mémoire, ...ou éventuellement être téléchargés via un réseau de communication, tel qu'lnternet.

Ce signal audio à imiter est ensuite analysé dans une étape d'analyse spectrale E11.

Dans cette étape d'analyse E11, l'intensité propre à chacune des bandes de fréquence analysées est mesurée.

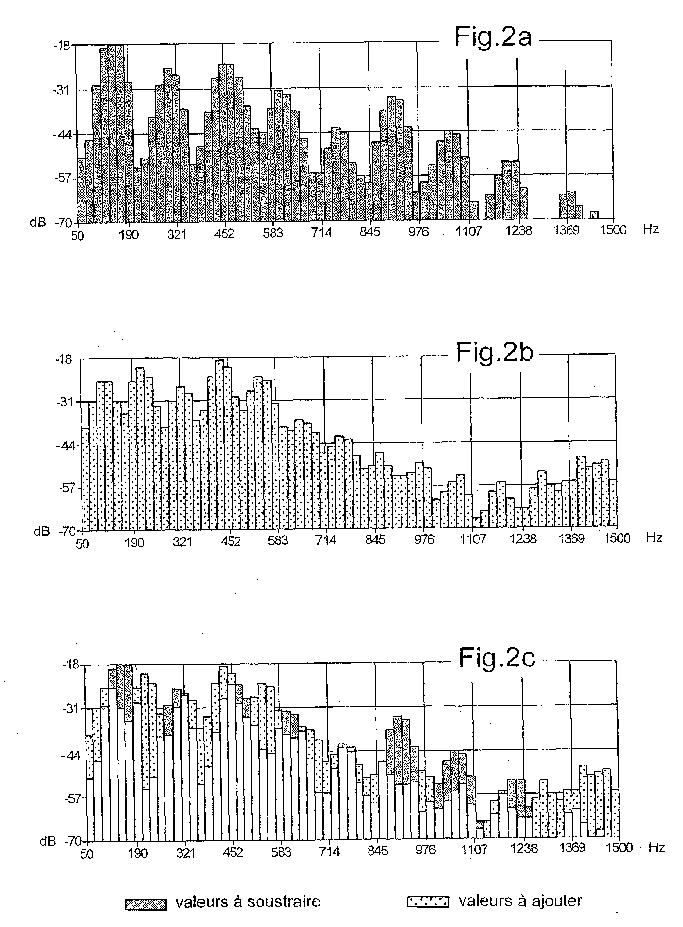

Le résultat de cette analyse spectrale est illustré sur un exemple à la figure 2a. Cette étape d'analyse E11 est ainsi mise en oeuvre sur une série de bandes de fréquence dans la plage de fréquences audibles, s'étendant entre 30 et 10 000 Hz.

La série de bandes de fréquence correspond à un partitionnement de la plage de fréquences.

En pratique, la plage de fréquences est découpée en au moins 50 bandes de fréquence, et de préférence en au moins 160 bandes de fréquence, afin d'obtenir une analyse suffisamment fine du signal audio.

On a illustré à la figure 2a un tel partitionnement sur une plage de fréquences comprises entre 50 et 1 500 Hz.

Ainsi pour chaque bande de fréquence, on peut connaître l'intensité mesurée en décibel de cette bande de fréquence présente dans le signal audio à imiter.

Dans ce premier mode de réalisation, le résultat de cette analyse spectrale, c'est-à-dire dans cet exemple, l'analyse telle qu'illustrée à la figure 2a, est stockée dans une étape de mémorisation E12 dans un fichier.

Le procédé de calibrage d'audio-intonation comporte également une étape d'acquisition E13 d'un signal audio imité par un sujet S. Dans cette étape d'acquisition E13, un signal audio imité est capté à partir d'un signal audio émis par le sujet S, par exemple par l'intermédiaire d'un microphone.

Dans ce mode de réalisation, le signal audio imité est tout d'abord analysé afin d'en mesurer la dynamique dans une étape de mesure E14.

Cette étape de mesure E14 permet ainsi de connaître l'enveloppe globale du signal audio imité.

Ensuite, conformément à l'invention, une étape d'analyse spectrale E15 est mise en oeuvre sur le signal audio imité.

Cette étape d'analyse spectrale E15 est similaire à celle décrite précédemment pour le signal audio à imiter et permet, sur une série de bandes de fréquence, d'analyser l'intensité du signal audio ainsi recueilli au niveau du sujet S.

On obtient ainsi comme illustré à la figure 2b, un spectre permettant de connaître l'intensité du signal sur chaque bande de fréquence, sur une plage de fréquences comprise entre 30 et 10 000 Hz.

On a illustré à la figure 2b un exemple de ce spectre sur la plage de fréquences comprises entre 50 et 1 500 Hz.

Le partitionnement en bandes de fréquence est identique à celui utilisé dans l'étape d'analyse spectrale E11 du signal audio à imiter.

Une étape de comparaison E16 est ensuite mise en oeuvre afin de comparer les spectres du modèle de signal audio et du signal audio imité.

Le résultat de cette comparaison, tel qu'illustré à la figure 2c, permet de calculer dans une étape de calcul E17, les modifications spectrales à apporter au signal audio imité.

Comme bien illustré sur la figure 2c, chaque bande de fréquence du signal audio imité est comparée, bande par bande, à chaque bande de fréquence du signal audio à imiter et est corrigée de telle sorte que les valeurs en intensité du signal audio imité correspondent à celle du modèle à imiter.

En pratique, on en déduit une correction à ajouter ou à soustraire au niveau de chaque bande de fréquence.

Cette étape de calcul permet ainsi de définir les modifications à apporter par bande de fréquence en plus ou en moins par rapport au modèle de signal audio.

Le résultat de ce calcul est utilisé dans une étape E18 de correction du signal audio imité. En pratique, un égaliseur multi-bandes dynamique est paramétré de telle sorte que les champs fréquentiels du signal audio imité soient égaux à ceux du modèle de signal audio acquis.

Le paramétrage est réalisé grâce à une commande de réglage automatique du gain par bande de fréquence.

Dans ce mode préférentiel de réalisation, on mesure ensuite la dynamique du signal audio corrigé après l'étape de correction E18 de manière à comparer dans une étape de comparaison E19 la dynamique du signal imité et la dynamique du signal audio corrigé.

Une étape de calcul E20 permet de définir la modification de dynamique à apporter au signal. Le résultat de ce calcul est utilisé dans une étape de correction E21 de la dynamique du signal audio corrigé.

En pratique, le résultat du calcul obtenu à l'étape de calcul E20 paramètre un amplificateur à gain variable qui est adapté à redresser la dynamique du signal.

Le paramétrage est réalisé grâce à une commande de réglage automatique du gain général.

Le procédé de calibrage comporte ensuite une étape d'émission E22 permettant de restituer le signal audio ainsi corrigé aux organes auditifs du sujet S.

Cette émission se fait de manière classique par l'intermédiaire d'un amplificateur dont la sortie est reliée à un casque.

Cet amplificateur permet de manière sélective de faire écouter au sujet S soit le signal audio imité après les traitements décrits précédemment, soit le modèle de signal audio acquis à l'étape d'acquisitlon E10.

L'étape d'émission aux organes auditifs du sujet S du modèle de signal audio à imiter est ainsi mise en oeuvre de préférence préalablement à l'étape d'acquisition E13 du signal audio imité par le sujet S

De préférence, une étape de modification E23 est adaptée à modifier le modèle de signal audio à imiter en fonction de paramètres représentatifs d'une langue à étudier.

En pratique, le signal audio à imiter passe par un égaliseur graphique multi-bandes prédéterminé, c'est-à-dire paramètré en fonction de la langue choisie de manière à accentuer les bandes fréquentielles spécifiques à cette langue.

De cette façon, le sujet S perçoit mieux les zones de fréquence dans lesquelles son oreille est habituellement peu sensible.

Afin en outre de faciliter le travail et notamment la répétition du signal audio à imiter par le sujet S, lorsque ce signal audio est un texte, le procédé comprend de préférence une étape d'affichage E24 du texte, par exemple via un écran associé à l'ordinateur.

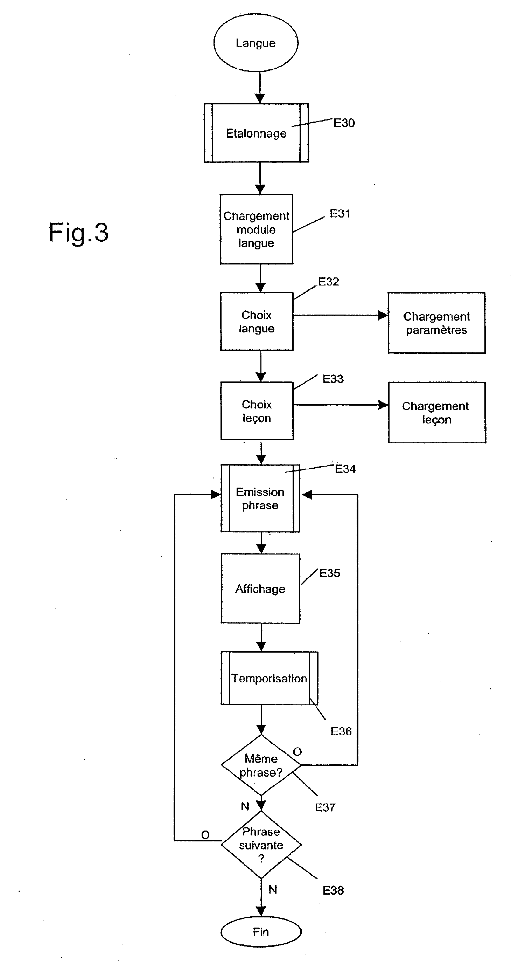

On va décrire à présent en référence à la figure 3 un procédé d'acquisition d'une pratique orale d'une langue à étudier mettant en oeuvre le procédé de calibrage d'audio-intonation tel qu'illustré à la figure 1.

Ce procédé d'acquisition d'une pratique orale d'une langue permet ainsi d'améliorer la prononciation d'un sujet S dans une langue choisie.

Ce procédé d'acquisition tel qu'illustré à la figure 3 comporte tout d'abord une étape d'étalonnage E30.

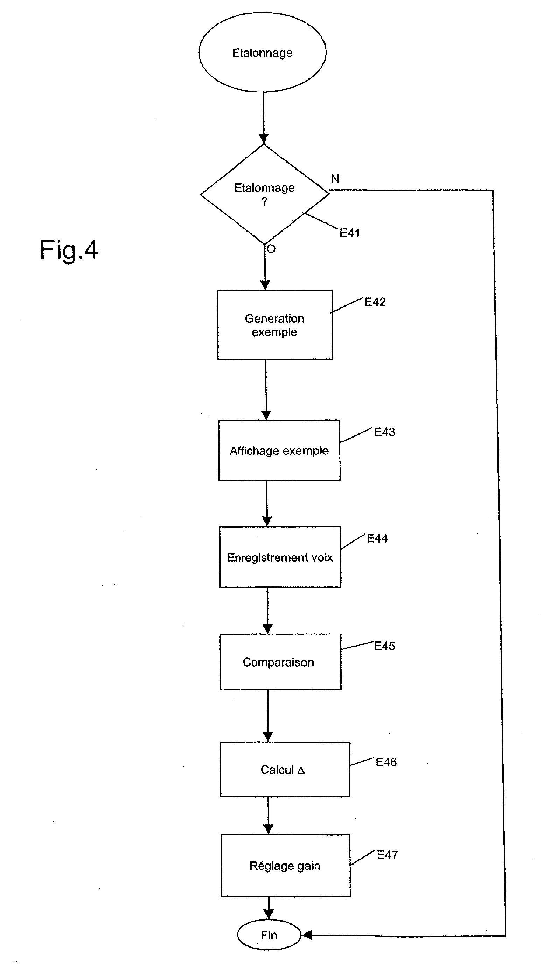

Cette étape d'étalonnage est illustrée à la figure 4.

Dans son principe général, cette étape d'étalonnage permet de régler automatiquement le niveau d'entrée d'une carte son d'un ordinateur en comparant, avant le début de son utilisation, le niveau d'une phrase qu'un sujet S prononce avec un exemple préenregistré.

Cet étalonnage permet à l'élève de travailler de façon autonome sur le procédé d'acquisition d'une pratique orale, en évitant des niveaux d'entrée sonore trop faibles ou trop forts qui pourraient perturber le bon fonctionnement du procédé.

A cet effet, cette étape d'étalonnage comporte une étape de test E41 au cours de laquelle le sujet peut ou non décider de réaliser cet étalonnage. En particulier, lorsque l'ordinateur et sa carte son associée viennent d'être utilisés par le même sujet, cette étape d'étalonnage pourrait être omise.

Dans l'affirmative, une étape de génération E42 d'un exemple permet de générer un signal audio de référence.

Une étape d'affichage E43 est adaptée à afficher le texte correspondant au signal audio généré à l'étape de génération E42.

Le sujet répète ensuite le signal audio d'exemple et sa voix est enregistrée dans l'étape d'enregistrement E44.

Une étape de comparaison E45 en intensité globale du signal audio d'exemple et du signal audio émis par le sujet est mise en oeuvre afin de calculer dans une étape de calcul E46 un écart de niveau d'intensité entre les deux signaux audio.

Une étape de réglage E47 permet ensuite de régler le gain d'entrée au niveau de la carte-son de l'ordinateur.

En revenant à la figure 3, cette étape d'étalonnage ayant été réalisée, une étape de chargement E31 permet de charger un logiciel comprenant le code du procédé d'acquisition d'une pratique orale d'une langue.

Dans ce mode de réalisation, un même logiciel est utilisable pour différentes langues.

Bien entendu, des logiciels séparés pourraient être utilisés pour des langues étrangères différentes.

Une étape de choix E32 permet dans ce mode de réalisation de choisir la langue souhaitée.

Cette étape de choix E32 permet de charger au niveau de l'ordinateur l'ensemble des paramètres associés à cette langue.

En particulier, ces paramètres comprennent un ou plusieurs spectres de fréquence spécifiques à la langue à étudier.

Il est également possible dans une seconde étape de choix E33 de choisir une leçon particulière.

En effet, pour chaque langue, il peut être prévu plusieurs leçons, chacune de ces leçons comprenant un certain nombre de mots ou de phrases préenregistrés.

Ces leçons peuvent être classées en fonction d'un niveau de difficultés de langue, ou encore en fonction de différents phonèmes à travailler, propres à chaque langue.

En pratique, le chargement des paramètres et de la leçon est effectué dans un ordinateur de manière classique dans une mémoire vive (Random Acces Memory ou RAM) de l'ordinateur.

Le procédé d'acquisition comprend ensuite une étape d'émission E34 d'une phrase ou d'un mot à répéter.

Cette étape d'émission d'une phrase correspond aux étapes d'acquisition E10 et de modification spectrale E23 telles qu'illustrées à la figure 1.

Lors de cette étape d'émission E34, l'entrée active de l'amplificateur correspond à la prise de son réalisée au niveau du fichier son F.

Cette étape d'émission E34 permet ainsi au sujet S d'entendre un signal audio à imiter correspondant à un mot ou à une phrase d'un texte prononcé par une personne native de la langue à étudier.

Simultanément, les étapes d'analyse E11 et de stockage E12 de l'analyse spectrale telles qu'illustrées à la figure 1 sont mises en oeuvre.

Afin de faciliter la mémorisation par le sujet du terme à répéter, une étape d'affichage E35 correspondant à l'étape d'affichage E24 illustrée à la figure 1 est mise en oeuvre simultanément à l'étape d'émission E34 d'une phrase.

Le procédé d'acquisition comprend ensuite une étape de temporisation E36 dans laquelle l'ensemble des étapes E13 à E22 telles qu'illustrées à la figure 1 sont mises en oeuvre.

Ainsi, pendant cette temporisation, le sujet répète le signal audio à imiter, qui est corrigé comme décrit précédemment et restitué à l'oreille du sujet en temps réel de telle sorte que celui-ci modifie de façon inconsciente et spontanée sa propre émission.

La durée de cette étape de temporisation E36 correspond sensiblement à la durée du signal audio à imiter augmentée de quelques secondes pour permettre au sujet de répéter le mot ou la phrase.

Eventuellement, cette durée de temporisation pourrait être réglable, par exemple par le sujet qui souhaiterait disposer d'un temps plus ou moins long pour répéter les différents mots ou phrases.

L'avancement de la leçon, c'est-à-dire la succession de mots à répéter et de mots répétés peut être automatique ou manuelle.

Dans ce mode de réalisation, une étape de test E37 permet de demander au sujet s'il souhaite retravailler la même phrase ou le même mot.

Dans l'affirmative, les étapes d'émission E34, d'affichage E35 et de temporisation E36 sont mises en oeuvre sur le même signal audio.

Dans la négative, une seconde étape de test E38 permet de demander au sujet s'il souhaite retravailler une phrase ou un mot suivant.

Dans l'affirmative, les étapes d'émission E34, d'affichage E35 et de temporisation E36 sont également mises en oeuvre sur un mot ou une phrase suivante préenregistré dans la leçon en cours.

Sinon, la leçon est interrompue.

Ainsi, des groupes de phrases ou des mots peuvent être répétés en boucle, l'élève pouvant travailler plus ou moins certaines parties de la leçon.

Après un certain nombre de séances, l'oreille du sujet est habituée à percevoir la langue et la perception des nouveaux champs fréquentiels, qui sont appliqués à son oreille, devient permanente. L'émission de la voix du sujet est alors également modifiée de manière permanente.

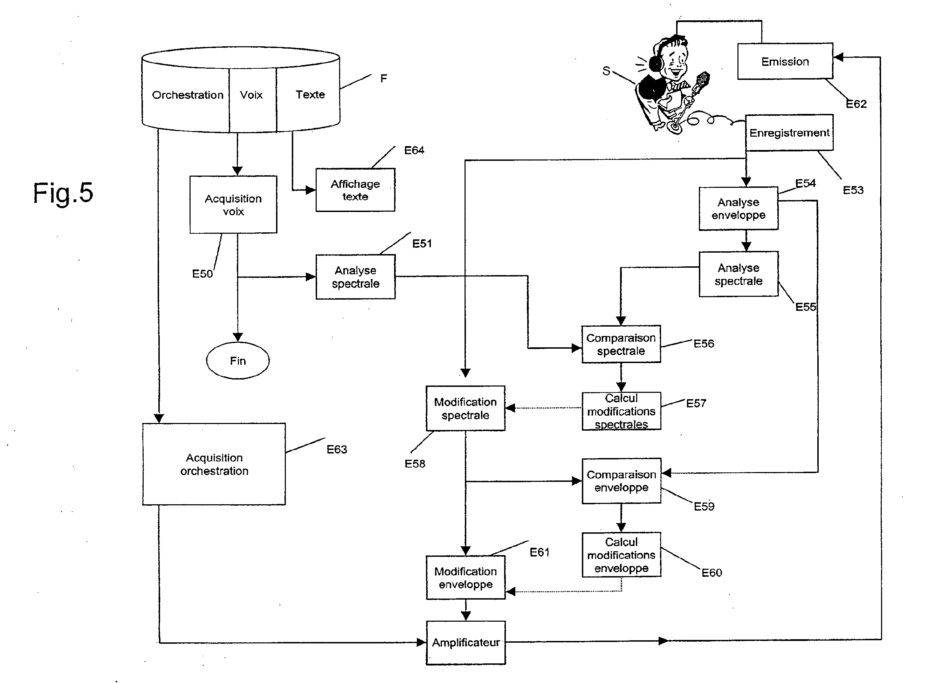

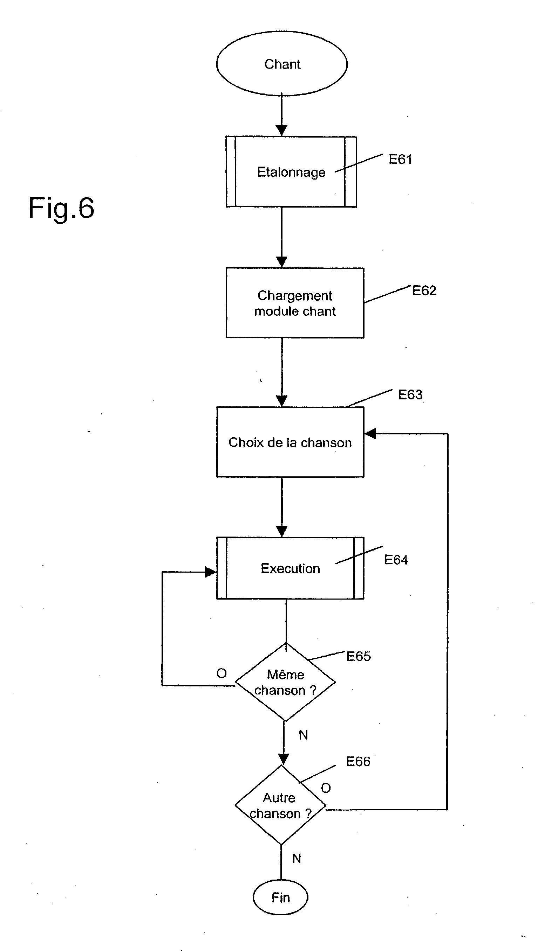

On va décrire à présent en référence aux figures 5 et 6 un procédé similaire permettant d'exécuter une chanson par un sujet.

Le procédé de calibrage d'audio-intonation permet dans cette application de modifier l'intonation d'un sujet afin d'adapter au mieux sa manière de chanter à celle du chanteur préenregistrée.

Elle permet ainsi à un sujet de chanter à la manière d'un chanteur, et peut être utilisée par exemple dans un système de karaoké.

On va tout d'abord décrire le procédé de calibrage d'audio-intonation conforme à l'invention en référence à la figure 5, similaire à celui mis en oeuvre dans une méthode d'acquisition d'une pratique orale d'une langue, illustrée à la figure 1.

Dans cette application, le fichier son F est adapté à mémoriser une ou plusieurs chansons. En pratique, pour chaque chanson il existe 3 fichiers-son, l'un ne contenant que la voix de l'artiste, l'autre l'orchestration associée à la chanson, et le troisième le texte de la chanson.

Comme précédemment, ce fichier-son peut être stocké sur un disque dur d'un ordinateur ou tout autre support informatique (cd-ROM, carte mémoire, ...). Il peut être également obtenu par téléchargement sur un réseau de communication tel qu'lnternet.

A la différence du procédé de calibrage d'audio-intonation illustré à la figure 1 (dans lequel les étapes d'acquisition d'un modèle E10 et d'analyse spectrale E11 de ce modèle d'une part, et d'enregistrement E13 et d'analyse spectrale E15 du signal audio imité d'autre part, sont réalisés alternativement, nécessitant ainsi une étape de stockage E12 de l'analyse du spectre du signal audio à imiter, afin d'en effectuer ultérieurement la comparaison) ici, une étape d'acquisition E50 d'un signal audio à imiter, correspondant à la voix de la chanson, est mise en oeuvre simultanément à l'étape d'enregistrement E53 du signal audio imité par le sujet S.

Comme précédemment, les étapes d'analyse spectrale E51, E55 sont mises en oeuvre respectivement sur le signal audio à imiter et sur le signal audio imité et le résultat fourni à l'entrée d'un comparateur afin de réaliser une étape de comparaison E56 au niveau du spectre.

Cette étape de comparaison E56 est suivie d'une étape de calcul E57 permettant de calculer les modifications, à apporter au signal audio imité en fonction du modèle enregistré.

Ces étapes de comparaison et de calcul sont similaires à celles décrites en référence aux figures 2a, 2b, 2c.

Afin d'obtenir une analyse spectrale poussée, la plage de fréquences est découpée de préférence en au moins 160 bandes de fréquence.

Les modifications ainsi calculées sont appliquées par une commande de réglage automatique du gain par bande afin de modifier dans une étape de correction E58 le signal audio imité.

Comme précédemment, cette correction peut être réalisée grâce à un égaliseur graphique à réglages dynamiques permettant, bande de fréquence par bande de fréquence, d'ajuster le signal audio imité au plus près du modèle acquis.

Avant de restituer le signal corrigé au sujet, une étape de modification d'enveloppe E61 est mise en oeuvre comme précédemment.

En pratique, une étape d'analyse E54 de la dynamique du signal audio enregistré à l'étape d'enregistrement E53 permet de connaître l'intensité globale du signal. Une étape de comparaison E59 compare la dynamique de ce signal audio enregistré à la dynamique du signal audio corrigé à l'étape de correction E58.

Une étape de calcul E60 permet de calculer les modifications à apporter au signal audio corrigé. Ces modifications sont appliquées par une commande de réglage automatique du gain général afin de modifier dans une étape de modification E61 le signal audio corrigé. Cette modification d'enveloppe est réalisée grâce à un amplificateur à gain variable.

Ce signal audio ainsi corrigé est restitué dans une étape d'émission E62 au sujet, via un amplificateur.

Ainsi, dans ce procédé de calibrage d'audio-intonation, l'amplificateur reçoit simultanément en entrée un signal audio corrigé et un signal d'orchestration acquis dans une étape d'acquisition E63 à partir du fichier-son F.

Le sujet entend ainsi simultanément l'orchestration et sa voix corrigée par le traitement décrit précédemment.

Afin de faciliter l'exécution de la chanson, une étape d'affichage E64 permet d'afficher le texte simultanément au déroulement de la chanson.

En pratique, et comme illustré à la figure 6, ce procédé de calibrage audio-intonation peut être mis en oeuvre dans un système plus complexe d'exécution d'une chanson par un sujet, du type karaoké.

Dans ce procédé d'exécution d'une chanson, une étape d'étalonnage E61 peut être mise en oeuvre préalablement à l'exécution d'une chanson.

Cette étape d'étalonnage correspond à l'étape d'étalonnage décrite en référence à la figure 4 et permet d'ajuster le gain d'entrée au niveau de la carte-son de l'ordinateur.

Une étape de chargement E62 est adaptée à charger un logiciel comprenant le code du procédé d'exécution d'une chanson.

Une étape de choix E63 permet en pratique au sujet de choisir une chanson parmi celles mémorisées sur le fichier-son F.

Une étape d'exécution E64 de la chanson est ensuite mise en oeuvre telle que décrite précédemment en référence à la figure 5.

Lors de la lecture d'une chanson, le fichier contenant l'orchestration seule est dirigé via l'amplificateur au sujet S, au moyen d'un casque.

Simultanément, le texte de la chanson est affiché sur l'écran de l'ordinateur dans une étape d'affichage E64. Le fichier modèle contenant la voix est lue simultanément et en parfaite synchronisation avec le fichier contenant l'orchestration. Le sujet chante également simultanément suivant l'orchestration de telle sorte que l'analyse spectrale des deux signaux audio peut être réalisée simultanément afin de réaliser les modifications adéquates en temps réel au signal audio imité.

Afin de faciliter cette simultanéité dans l'interprétation de la chanson, une aide peut être apportée par l'émission d'un signal métronomique et éventuellement d'un curseur apparaissant sur le texte de la chanson pour indiquer quel morceau du texte doit être chanté.

La perception de sa propre émission modifiée en temps réel amène le sujet à modifier lui aussi en temps réel et de façon inconsciente sa propre émission.

Il est ainsi amené à chanter à la manière du chanteur préenregistrée.

Lorsque l'exécution de la chanson est terminée, une étape de test E65 permet de donner le choix au sujet d'exécuter de nouveau la même chanson.

Dans l'affirmative, l'étape d'exécution E64 est réitérée sur le même contenu du fichier-son.

Sinon une seconde étape de test E66 permet de donner le choix au sujet d'exécuter une autre chanson.

Dans l'affirmative, l'étape de choix E63 est réitérée afin de sélectionner une des chansons préenregistrées sur le fichier son.

L'étape d'exécution E64 est alors mise en oeuvre sur cette nouvelle chanson.

Le procédé d'exécution d'une chanson se termine lorsqu'aucune autre chanson n'est sélectionnée à l'issue de l'étape de test E66.

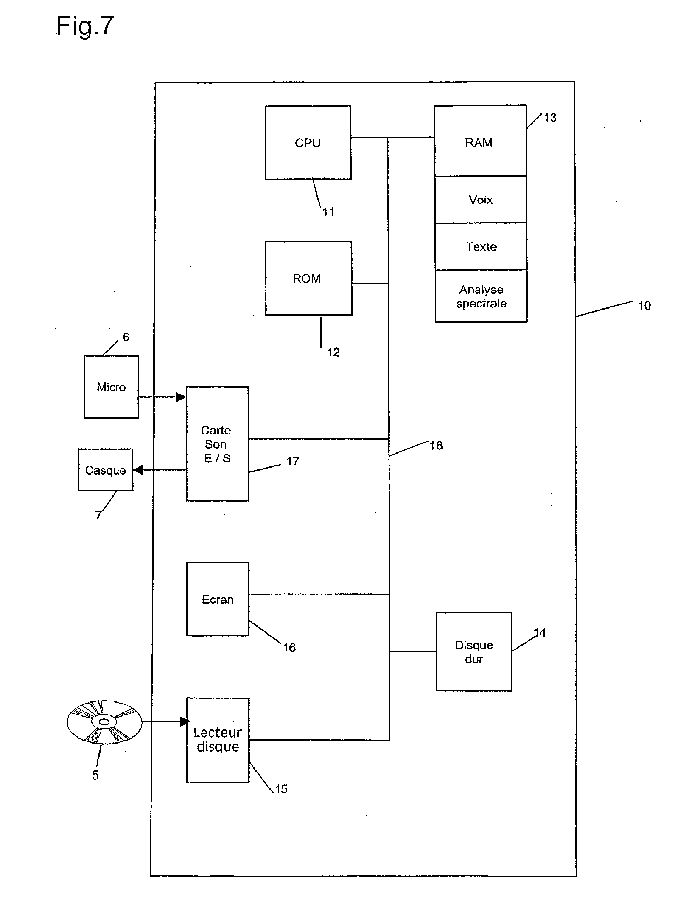

Le procédé de calibrage d'audio-intonation, utilisé lors de l'exécution d'une chanson ou lors de l'acquisition d'une pratique orale d'une langue à étudier, peut être mis en oeuvre dans un ordinateur 10 tel qu'illustré à la figure 7.

L'ensemble des moyens mis en oeuvre par ce procédé sont incorporés dans un micro-processeur (CPU) 11, une mémoire morte 12 ("Read Only Memory" ou ROM) étant adapté à mémoriser un programme de calibrage d'audio-intonation ainsi qu'un programme d'exécution d'une chanson ou d'acquisition d'une pratique orale d'une langue.

Une mémoire vive 13 ("Random Acces Memory" ou RAM) est adaptée à mémoriser dans des registres les valeurs modifiées lors de l'exécution de ces programmes.

En pratique, elle comprend des registres adaptés à mémoriser les fichiers-son F, ainsi que les résultats de l'analyse spectrale.

Le micro-processeur 11 est intégré à un ordinateur qui peut éventuellement être connecté à un réseau de communication via une interface de communication.

L'ordinateur comporte en outre des moyens de stockage de documents, tel qu'un disque dur 14, où est adapté à coopérer au moyen d'un lecteur de disques 15 (disquette, disque compact, ou carte informatique) avec des moyens de stockage de documents amovible tels que des disques 5.

Ces moyens de stockage, fixes ou amovibles, peuvent ainsi comporter le code du procédé de calibrage d'audio intonation, ainsi que le code du procédé d'acquisition d'une pratique orale d'une langue ou du procédé d'exécution d'une chanson.

Eventuellement, le code de ces procédés peut être mémorisé par exemple sur le disque dur de l'ordinateur 10, et les fichiers-son utilisés dans différentes applications peuvent être mémorisés séparément sur des disques 5 adaptés à coopérer avec le lecteur de disques 15.

A titre de variante, le programme permettant de mettre en oeuvre l'invention peut être stocké dans la mémoire morte 12.

L'ordinateur 10 possède également un écran 16 permettant de servir d'interface avec le sujet S afin notamment de présenter au sujet le texte à répéter ou à chanter.

Une carte-son 17 est également prévue et est adaptée à coopérer avec un micro 6 et un casque 7 afin de pouvoir émettre un signal audio ou recevoir un signal audio émis par le sujet.

L'unité centrale 11 exécutera alors les instructions relatives à la mise en oeuvre de l'invention. Lors de la mise sous tension, les programmes et méthodes relatives à l'invention stockés dans une mémoire, par exemple la mémoire morte 12, sont transférés dans la mémoire vive 13 qui contiendra alors le code exécutable de l'invention ainsi que les variables nécessaires à la mise en oeuvre de l'invention.

Un bus de communication 18 permet la communication entre les différents sous éléments de l'ordinateur 10 ou liés à lui.

La représentation de ce bus 18 n'est pas limitative et notamment le micro-processeur 11 est susceptible de communiquer des instructions à tout sous-élément directement ou par l'intermédiaire d'un autre sous-élément.

Grâce à l'invention, le procédé de calibrage d'audio-intonation peut ainsi être mis en oeuvre dans un ordinateur individuel, et peut être utilisé par un sujet S sans requérir une intervention extérieure.

En particulier, lors de l'acquisition de la pratique orale d'une langue, le sujet S peut utiliser et travailler son intonation grâce aux différents fichiers-son préenregistrés, sans nécessiter la présence d'un tuteur.

Bien entendu, de nombreuses modifications peuvent être apportées aux exemples de réalisation décrits précédemment sans sortir du cadre de l'invention.

## Revendications

1. Procédé de calibrage d'audio-intonation dans lequel un signal audio émis par un sujet (S) est restitué après traitement en temps réel aux organes auditifs dudit sujet (S), **caractérisé en ce qu'**il comprend les étapes suivantes :
- acquisition (E10, E50) d'un modèle de signal audio à imiter;
- analyse spectrale (E11, E51) dudit modèle de signal audio ;
- acquisition (E13, E53) dudit signal audio imité par le sujet (S) ;
- analyse spectrale (E15, E55) du signal audio imité ;
- comparaison (E16, E56) des spectres du modèle de signal audio et du signal audio imité ;
- correction (E18, E58) du signal audio imité en fonction du résultat de ladite comparaison ; et
- restitution (E22, E62) du signal audio corrigé aux organes auditifs du sujet (S).

2. Procédé de calibrage d'audio-intonation conforme à la revendication 1, **caractérisé en ce qu'**il comprend en outre les étapes suivantes :
- mesure (E14, E24) de la dynamique du signal audio imité par le sujet (S) ;
- mesure (E18, E28) de la dynamique du signal audio corrigé ;
- comparaison (E19, E59) de la dynamique du signal audio imité et du signal audio corrigé ; et
- correction (E21, E61) de la dynamique du signal audio corrigé en fonction du résultat de ladite comparaison avant restitution du signal audio corrigé aux organes auditifs du sujet (S).

3. Procédé de calibrage d'audio-intonation conforme à l'une des revendications 1 ou 2, **caractérisé en ce que** les étapes de comparaison (E16, E56) et de correction (E18, E58) sont mises en oeuvre sur une série de bandes de fréquence dans la plage de fréquences audibles.

4. Procédé de calibrage d'audio-intonation conforme à la revendication 3, **caractérisé en ce que** la série de bandes de fréquence correspond à un partitionnement de la plage de fréquences audibles.

5. Procédé de calibrage d'audio-intonation conforme à l'une des revendications 3 ou 4, **caractérisé en ce que** la plage de fréquence audible est découpée en au moins 50 bandes de fréquence.

6. Procédé de calibrage d'audio-intonation conforme à l'une des revendications 1 à 5, **caractérisé en ce que** le modèle de signal audio à imiter est un texte et **en ce que** le ledit procédé comprend en outre une étape d'affichage (E24, E64) dudit texte.

7. Procédé de calibrage d'audio-intonation conforme à l'une des revendications 1 à 6, **caractérisé en ce qu'**il comprend en outre une étape de mémorisation (E12) de l'analyse spectrale dudit modèle de signal audio à imiter.

8. Procédé de calibrage d'audio-intonation conforme à l'une des revendications 1 à 7, **caractérisé en ce qu'**il comprend une étape d'émission (E22) aux organes auditifs du sujet (S) dudit modèle de signal audio à imiter, préalablement à l'étape d'acquisition (E13) du signal audio imité par le sujet (S).

9. Procédé de calibrage d'audio-intonation conforme à la revendication 8, **caractérisé en ce qu'**il comprend en outre préalablement à l'étape d'émission (E22), une étape de modification (E23) du modèle de signal audio à imiter en fonction de paramètres représentatifs d'une langue à étudier.

10. Procédé de calibrage d'audio-intonation conforme à l'une des revendications 1 à 6, **caractérisé en ce que** le modèle de signal audio à imiter est une chanson et **en ce que** ledit procédé comprend en outre une étape d'émission (E62) aux organes auditifs du sujet (S) d'un signal d'orchestration de la ladite chanson, simultanément à l'étape de restitution (E62) du signal audio corrigé aux organes auditifs du sujet (S).

11. Procédé d'acquisition d'une pratique orale d'une langue à étudier, dans lequel un signal audio émis par un sujet (S) est restitué après traitement en temps réel aux organes auditifs du sujet (S), **caractérisé en ce qu'**il met en oeuvre le procédé de calibrage d'audio-intonation conforme à l'une des revendications 1 à 9.

12. Procédé d'exécution d'une chanson par un sujet (S), dans lequel un signal audio émis par un sujet (S) est restitué après traitement en temps réel aux organes auditifs du sujet, **caractérisé en ce qu'**il met en oeuvre le procédé de calibrage d'audio-intonation conforme à l'une des revendications 1 à 6 ou 10.

13. Moyen de stockage d'informations, fixe ou amovible, **caractérisé en ce qu'**il comprend des portions de code logiciel adaptées à mettre en oeuvre les étapes du procédé de calibrage d'audio-intonation conforme à l'une des revendications 1 à 10.

14. Moyen de stockage d'informations, fixe ou amovible, **caractérisé en ce qu'**il comprend des portions de code logiciel adaptées à mettre en oeuvre les étapes du procédé d'acquisition d'une pratique orale d'une langue à étudier conforme à la revendication 11.

15. Moyen de stockage d'informations, fixe ou amovible, **caractérisé en ce qu'**il comprend des portions de code logiciel adaptées à mettre en oeuvre les étapes du procédé d'exécution d'une chanson conforme à la revendication 12.

## Patentansprüche

1. Verfahren zur Kalibrierung einer Audio-Intonation, bei dem ein von einer Person (S) abgegebenes Audiosignal nach Echtzeit-Verarbeitung in einer für die Person (S) hörbaren Weise wiedergegeben wird,
**dadurch gekennzeichnet, dass** es folgende Schritte umfasst:
- Erlangen (E10, E50) eines Modells für ein nachzubildendes Audiosignal;
- Spektralanalyse (E11, E51) des Audiosignal-Modells;
- Erfassen (E13, E53) des von der Person (S) nachgebildeten Audiosignals;
- Spektralanalyse (E16, E55) des nachgebildeten Audiosignals;
- Vergleichen (E16, E56) der Spektren des Audiosignal-Modells und des nachgebildeten Audiosignals,
- Berichtigen (E18, E56) des nachgebildeten Audiosignals in Abhängigkeit des Ergebnisses dieses Vergleichs; und
- Wiedergeben (E22, E62) des berichtigten Audiosignals in einer für die Person (S) hörbaren Weise.

2. Verfahren zur Kalibrierung einer Audio-Intonation nach Anspruch 1,
**dadurch gekennzeichnet, dass** es ferner folgende Schritte umfasst:
- Messen (E14, E24) der Dynamik des von der Person (S) nachgebildeten Audiosignals;
- Messen (E18, E28) der Dynamik des berichtigten Audiosignals;
- Vergleichen (E19, E59) der Dynamik des nachgebildeten Audiosignals und des berichtigten Audiosignals; und
- Berichtigen (E21, E61) der Dynamik des berichtigten Audiosignals in Abhängigkeit des Ergebnisses dieses Vergleichs vor Wiedergabe des berichtigten Audiosignals in einer für die Person (S) hörbaren Weise.

3. Verfahren zur Kalibrierung einer Audio-Intonation nach einem der Ansprüche 1 oder 2,
**dadurch gekennzeichnet, dass** die Schritte des Vergleichens (E16, E56) und des Berichtigens (E18, E58) auf eine Reihe von Frequenzbändern im hörbaren Frequenzbereich angewendet werden.

4. Verfahren zur Kalibrierung einer Audio-Intonation nach Anspruch 3,
**dadurch gekennzeichnet, dass** die Reihe von Frequenzbändern einer Partitionierung des hörbaren Frequenzbereichs entspricht.

5. Verfahren zur Kalibrierung einer Audio-Intonation nach einem der Ansprüche 3 oder 4,
**dadurch gekennzeichnet, dass** der hörbare Frequenzbereich in wenigstens 50 Frequenzbänder unterteilt ist.

6. Verfahren zur Kalibrierung einer Audio-Intonation nach einem der Ansprüche 1 bis 5,
**dadurch gekennzeichnet, dass** das Modell des nachzubildenden Audiosignals ein Text ist und dass das Verfahren ferner einen Schritt zum Anzeigen (E24, E64) dieses Textes umfasst.

7. Verfahren zur Kalibrierung einer Audio-Intonation nach einem der Ansprüche 1 bis 6,
**dadurch gekennzeichnet, dass** es ferner einen Schritt zum Speichern (E12) der Spektralanalyse des Modells für das nachzubildende Audiosignal umfasst.

8. Verfahren zur Kalibrierung einer Audio-Intonation nach einem der Ansprüche 1 bis 7,
**dadurch gekennzeichnet, dass** es vor dem Schritt des Erfassens (E13) des von der Person (S) nachgebildeten Audiosignals einen Schritt zum Aussenden (E22) des Modells des nachzubildenden Audiosignals in einer für die Person (S) hörbaren Weise umfasst.

9. Verfahren zur Kalibrierung einer Audio-Intonation nach Anspruch 8,
**dadurch gekennzeichnet, dass** es ferner vor dem Aussendungsschritt (E22) einen Schritt zum Ändern (E23) des Modells des nachzubildenden Audiosignals umfasst in Abhängigkeit von Parametern, die für eine zu erlernende Sprache repräsentativ sind.

10. Verfahren zur Kalibrierung einer Audio-Intonation nach einem der Ansprüche 1 bis 6,
**dadurch gekennzeichnet, dass** das Modell für das nachzubildende Audiosignal ein Lied ist und dass das Verfahren ferner einen Schritt zum Aussenden (E62) eines orchestrierten Signals dieses Lieds in einer für die Person (S) hörbaren Weise umfasst, gleichzeitig mit dem Schritt zur Wiedergabe (E62) des berichtigten Audiosignals in einer für die Person (S) hörbaren Weise.

11. Verfahren zum Erwerb einer Sprechpraxis in einer zu erlernenden Sprache, bei dem ein von einer Person (S) abgegebenes Audiosignal nach Echtzeit-Verarbeitung in einer für die Person (S) hörbaren Weise wiedergegeben wird,
**dadurch gekennzeichnet, dass** es das Verfahren zur Kalibrierung einer Audio-Intonation nach einem der Ansprüche 1 bis 9 anwendet.

12. Verfahren zum Ausführen eines Lieds durch eine Person (S), bei dem ein von einer Person (S) abgegebenes Audiosignal nach Echtzeit-Verarbeitung in einer für die Person (S) hörbaren Weise wiedergegeben wird,
**dadurch gekennzeichnet, dass** es das Verfahren zur Kalibrierung einer Audio-Intonation nach einem der Ansprüche 1 bis 6 oder 10 anwendet.

13. Stationäres oder wechselbares Informationsspeichermittel,
**dadurch gekennzeichnet, dass** es Softwarecodeteile umfasst, die die Schritte des Verfahrens zur Kalibrierung einer Audio-Intonation nach einem der Ansprüche 1 bis 10 anzuwenden vermögen.

14. Stationäres oder wechselbares Informationsspeichermittel,
**dadurch gekennzeichnet, dass** es Softwarecodeteile umfasst, die die Schritte des Verfahrens zum Erwerb einer Sprechpraxis in einer zu erlernenden Sprache nach Anspruch 11 anzuwenden vermögen.

15. Stationäres oder wechselbares Informationsspeichermittel,
**dadurch gekennzeichnet, dass** es Softwarecodeteile umfasst, die die Schritte des Verfahrens zum Ausführen eines Lieds nach Anspruch 12 anzuwenden vermögen.

## Claims

1. An audio-intonation calibration method in which an audio signal emitted by a subject (S) is reproduced to the auditory organs of said subject (S) after real time processing, which method is **characterized in that** it comprises the following steps:
- acquisition (E10, E50) of a model of audio signal to be imitated;
- spectral analysis (E11, E51) of said model audio signal;
- acquisition (E13, E53) of said audio signal imitated by the subject (S);
- spectral analysis (E15, E55) of the imitated audio signal;
- comparison (E16, E56) of the spectra of the model audio signal and the imitated audio signal;
- correction (E18, E58) of the imitated audio signal as a function of the result of said comparison; and
- reproduction (E22, E62) to the auditory organs of the subject (S) of the corrected audio signal.

2. An audio intonation calibration method according to claim 1, **characterized in that** it further includes the following steps:
- measurement (E14, E24) of the dynamic range of the audio signal imitated by the subject (S);
- measurement (E18, E28) of the dynamic range of the corrected audio signal;
- comparison (E19, E59) of the dynamic range of the imitated audio signal and the corrected audio signal; and
- correction (E21, E61) of the dynamic range of the corrected audio signal as a function of the result of said comparison before reproduction to the auditory organs of the subject (S) of the corrected audio signal.

3. An audio-intonation calibration method according to either claim 1 or claim 2, **characterized in that** the comparison steps (E16, E56) and correction steps (E18, E58) are executed over a series of frequency bands in the range of audible frequencies.

4. An audio-intonation calibration method according to claim 3, **characterized in that** the series of frequency bands corresponds to a subdivision of the range of audible frequencies.

5. An audio-intonation calibration method according to either claim 3 or claim 4, **characterized in that** the range of audible frequencies is divided into at least 50 frequency bands.

6. An audio-intonation calibration method according to any one of claims 1 to 5, **characterized in that** the model audio signal to be imitated is a text and **in that** said method further includes a step (E24, E64) of displaying said text.

7. An audio-intonation calibration method according to any one of claims 1 to 6, **characterized in that** it further includes a step (E12) of memorizing the spectral analysis of said model audio signal to be imitated.

8. An audio-intonation calibration method according to any one of claims 1 to 7, **characterized in that** it includes a step (E22) of emitting said model audio signal to be imitated to the auditory organs of the subject (S) before the step (E13) of acquiring the audio signal imitated by the subject (S).

9. An audio-intonation calibration method according to claim 8, **characterized in that** it further includes, before the emission step (E22), a step (E23) of modifying the model audio signal to be imitated as a function of parameters representative of a language being studied.

10. An audio-intonation calibration method according to any one of claims 1 to 6, **characterized in that** the model audio signal to be imitated is a song and **in that** said method further includes, simultaneously with the step (E62) of reproducing the corrected audio signal to the auditory organs of the subject (S), a step (E62) of emitting an orchestration signal of said song to the auditory organs of the subject (S).

11. A method of practicing speaking a language being studied, in which method an audio signal emitted by a subject (S) is reproduced to the auditory organs of the subject (S) after real time processing, and which method is **characterized in that** it uses an audio-intonation calibration method according to any one of claims 1 to 9.

12. A method of performance of a song by a subject (S), in which method an audio signal emitted by a subject (S) is reproduced to the auditory organs of the subject after real time processing, and which method is **characterized in that** it uses an audio-intonation calibration method according to any one of claims 1 to 6 or claim 10.

13. Fixed or removable information storage means, **characterized in that** said means contain software code portions adapted to execute the steps of an audio-intonation calibration method according to any one of claims 1 to 10.

14. Fixed or removable storage means **characterized in that** said means contain software code portions adapted to execute the steps of the method according to claim 11 of practicing speaking a language being studied.

15. Fixed or removable information storage means **characterized in that** said means contain software code portions adapted to execute the steps of the method according to claim 12 of performing a song.
